# EUROPÄISCHE PATENTSCHRIFT

(11) **EP 1 995 426 B1**
(45) Veröffentlichungstag und Bekanntmachung des Hinweises auf die Patenterteilung: **21.09.2011**
(21) Anmeldenummer: 07075496.5
(22) Anmeldetag: 20.06.2007
(51) Int. Cl.: F02B 39/10, H02K 5/128, H02K 7/14, H02K 7/18

(54) **Elektromotor**
Electric motor
Moteur électrique

(30) Priorität: 24.05.2007 EP 07090100
(43) Veröffentlichungstag der Anmeldung: 26.11.2008
(73) Patentinhaber: SycoTec GmbH & Co. KG, 88299 Leutkirch im Allgäu (DE); Lindenmaier AG, 88471 Laupheim (DE)
(72) Erfinder: Bischof, Thomas§, 87758 Illerbeuren (DE); Maier, Sandra, 88410 Bad Wurzach (DE); Kämpfer, Oliver, 87700 Memmingen (DE); Gödeke, Holger, 88480 Achtstetten (DE); Löffler, Rudolf, 88545 Unteressendorf (DE); Heber, Ralf, 89155 Erbach-Esingen (DE)
(74) Vertreter: Pfenning, Meinig & Partner GbR

(56) Entgegenhaltungen:
- EP-A1- 0 642 210
- EP-A2- 1 182 346
- DE-A1- 3 843 933
- DE-A1-102005 010 921
- JP-A- 5 316 702
- US-A- 5 473 211

## Beschreibung

Die vorliegende Erfindung betrifft einen Elektromotor nach dem Oberbegriff des Patentanspruches 1.

Elektromotoren sind in verschiedenen Ausführungen bekannt. Zur Leitung von Medien sind beispielsweise Motoren bekannt, die einen Rotor und einen darum befindlichen Stator aufweisen, wobei der Rotor mit einem Medienförderrad verbunden ist und hierdurch den Fluss von Medien regeln kann.

Bei medienführenden Motoren wird eine einfache Bauweise sowie eine höchst mögliche Integration in ein bestehendes Gehäusesystem angestrebt. Hierbei ist neben der aus Reparaturgründen angestrebten Einfachheit auch auf die Dichtigkeit, insbesondere der stromführenden Teile des Elektromotors zu achten.

Die EP 1 182 346 A2 betrifft einen Abgasturbolader für eine Brennkraftmaschine. Diese weist eine im Abgasstrang angeordnete Abgasturbine und einen im Ansaugtrakt angeordneten Verdichter auf, der über eine Welle mit der Turbine verbunden ist, wobei zumindest ein rotationsbewegliches Bauteil des Laders von einem Elektromotor antreibbar ist. Der Rotor des Elektromotors ist einteilig mit dem Verdichterrad des Verdichters, und zwar an der radial äußersten Stelle, ausgebildet. Dieser wirkt mit einem Stator im Verdichtergehäuse zusammen, zwischen Rotor und Stator ist hierbei ein sehr schmaler Spalt gezeigt (siehe beispielsweise Fig. 1 der EP 1 182 346 A2).

Die DE 38 43 933 A1 beschreibt einen Unterölmotor zum Anschluss an Pumpen sowie Verfahren zu dessen Betreiben. Dieser ist ausgebildet zur Druckerzeugung in ölhydraulischen Anlagen, mit einem zwischen Läufer und Stator etwa parallel zur Antriebswelle verlaufenden Spalt, der an den Stirnseiten des Unterölmotors mündet und vom Hydrauliköl flutbar ist, wobei eine Mündung des Spaltes von einem Profil überdeckt und der Spalt mit einer Leitung für Druckluft oder dergleichen verbunden ist.

Die EP 0 642 210 A1 betrifft einen bürstenlosen Hochgeschwindigkeitsmotor mit einem Rotor, der gekapselte Permanentmagnete aus Seltene-Erden-Materialien aufweist. Fokus ist hierbei die Eignung für extrem hohe Drehzahlen.

Der Erfindung liegt daher die Aufgabe zugrunde, einen Elektromotor zu schaffen, der einen äußerst einfachen Aufbau aufweist, in Bezug auf zu fördernde Medien eine gute Dichtigkeit zeigt und trotzdem leistungsfähig bzw. energieeffizient ist.

Diese Aufgabe wird durch einen Elektromotor nach Anspruch 1 gelöst. Es handelt sich hierbei um einen Elektromotor zur Förderung von Medien, wobei dieser einen Stator, einen Rotor mit einem Rotormagneten, sowie zwischen Stator und Rotor eine Medien-Durchlassöffnung aufweist. Der kleinere Innendurchmesser des Stators beträgt hierbei 1,5- bis 8-mal, vorzugsweise 2- bis 4-mal, soviel wie der größte Außendurchmesser des Rotormagneten.

Unter "Medien" werden vorliegend sämtliche fließfähigen Stoffe, wie z.B. Gase, Flüssigkeiten, Pasten, Stäube oder körnige Stoffe verstanden.

Mit "größter Außendurchmesser" des Rotormagneten ist der Durchmesser gemeint, den das tatsächlich magnetisch wirksame Material (also ohne eine Armierung um den Rotormagneten) tatsächlich hat. Sollte der Rotormagnet keine kreisrunde Form aufweisen, so wird unter dem größten Außendurchmesser der größtmögliche Einbeschriebene Kreis in den entsprechenden Querschnitt des Magnetmaterials verstanden.

Unter "kleinster Innendurchmesser des Stators" wird der kleinste Innendurchmesser des elektrisch bzw. magnetisch tatsächlich wirksamen Stators verstanden. Eine Abschirmung z.B. aus einem Kunststoffmaterial vom Stator zum Rotor hin, der beispielsweise dem Korrosionsschutz dient, wird hierbei nicht als Teil des Stators angesehen, sondern es zählen lediglich die kleinsten Durchmesser der (in der Regel metallischen) elektrisch bzw. magnetisch wirksamen Teile. Bei dem erfindungsgemäßen Motor handelt es sich um einen Medienspaltmotor, also um einen Permanentmagnet-Synchronmotor mit der besonderen Eigenschaft eines unverhältnismäßig großen Luftspaltes zwischen Stator und Rotor. Dieser große Luftspalt ermöglicht den Transport verschiedener Medien zwischen Rotor und Stator in axialer Richtung. Der Rotormagnet kann hierbei direkt an eine Fördereinrichtung gekoppelt oder auch in diese integriert sein.

Bei konventionellen Luftspaltmotoren werden bei herkömmlicher Motorauslegung ohne Mediennutzung/Durchflussfunktion des Luftspaltes die geringste mögliche Baugröße für das angestrebte Drehmoment sowie ein hoher magnetischer Fluss bei geringstem Einsatz von Permanentmagnetmaterial angestrebt. Aufgrund der Tatsache, dass der magnetische Widerstand im Luftspalt höher ist als im ferromagnetischen Teil des Magnetkreises wird also bei konventionellen Motoren stets auf einen kleinen Luftspalt geachtet.

Der vorliegende Medienspaltmotor ist im Grunde aufgebaut wie ein herkömmlicher Permanentmagnet-Synchronmotor, jedoch mit der Besonderheit eines Statorinnendurchmessers, der im Verhältnis zum Rotor- bzw. zum Permanentmagnetaußendurchmesser überdimensional groß ist.

Um trotz des großen Spaltes zwischen Rotor und Stator und des damit verbundenen sehr hohen magnetischen Widerstandes, sowie des hohen Streuanteils an den Polübergängen den erforderlichen magnetischen Fluss zu erzeugen, bedarf es des Einsatzes von Magneten, welche eine sehr hohe Remanenz und eine sehr hohe Energiedichte aufweisen. Hierfür eignen sich im besonderen Seltene-Erden-Magnet-Werkstoffe. Gleichzeitig muss die Magnethöhe entsprechend angepasst werden. Trotz des relativ geringen Flusses kann ein hoher Motorwirkungsgrad, bezogen auf den Rotor- bzw. Magnetdurchmesser erzielt werden, da durch den großen Außendurchmesser des Stators eine relativ große Wickelfläche zur Verfügung steht.

Es ist also insbesondere für den Fachmann erstaunlich, dass trotz des ungewöhnlich großen Luftspaltes ein gut funktionierter Motor konzipierbar ist.

Hierbei ermöglicht sogar der große Spalt zwischen Rotor und Stator es, den Rotormagneten in axialer Richtung (Richtung der Drehachse) etwas zu verschieben, ohne dass die Kennwerte sich hierdurch merklich verschlechtern.

Vorteilhafte Weiterbildungen der vorliegenden Erfindung werden in den abhängigen Ansprüchen bzw. den Verwendungsansprüchen angegeben.

Der Rotor des Elektromotors weist vorzugsweise einen Rotormagneten auf, der von einer Armierung umgeben ist. Hierdurch wird der Rotormagnet mechanisch geschützt. Es kann außerdem auf diese Weise auf die Art des Magnetfeldes Einfluss genommen werden. Um einen Rotormagneten, der stirnseitig sonst einem Medium ausgesetzt wäre, den bestmöglichen Schutz zu geben, kann beispielsweise hier auch eine "becherförmige" Ausgestaltung vorgesehen sein, in die der Rotormagnet eingesteckt wird. Die Armierung des Rotormagneten ist hierbei (ebenso wie der Rotormagnet vorzugsweise selbst) im Wesentlichen zylinderförmig ausgeführt.

Vorzugsweise enthält der Elektromotor einen Stator, der im Wesentlichen eine hohlzylindrische Form aufweist und der den Rotor konzentrisch umgibt. Hierbei ist vorteilhaft, dass der Stator als Teil der Innenwand des umliegenden Gehäuses, beispielsweise eines Verdichtergehäuses eines Turboladers ausgeführt werden kann. Der Stator kann beispielsweise auch als Einsatz in eine korrespondierende Öffnung des Verdichtergehäuses einsetzbar sein. Vorteilhaft an diesen Ausführungsformen ist, dass nur eine geringstmögliche konstruktive Änderung, zum Beispiel herkömmlicher mechanischer Turbolader notwendig ist, so dass hierdurch, insbesondere in der Großserie, große Kosten- und Wettbewerbsvorteile realisierbar sind.

Neben den oben genannten Varianten, die die äußere Umfassung des Stators fokussieren, kann der Stator auch nochmals zum Rotor hin mit einer Abschirmung versehen sein. Diese dient dem Schutz des Stators, insbesondere dem Korrosionsschutz. Die Abschirmung kann vorzugsweise in Form eines dünnen Rohres oder eines Schlauches gegeben sein, wobei diese Abschirmung vorzugsweise aus elektrisch und magnetisch nicht leitendem Material ausgeführt ist.

Insgesamt ist also die hohlzylindrische Ausführung des Stators vorteilhaft, aber nicht unbedingt zwingend.

Der Rotor kann auf unterschiedliche Weisen ausgeführt sein. Vorzugsweise weist der Rotor eine Rotorwelle auf, wobei diese Rotorwelle einfach oder mehrfach über Ihre Länge gelagert ist. In einer besonders vorteilhaften Ausführungsform ist die Rotorwelle im Wesentlichen einseitig gelagert und kragt auf der anderen Seite im Wesentlichen frei aus. Hierdurch wird die Notwendigkeit von einer weiteren Lagerstelle sowie gegebenenfalls von Streben zwischen Rotor und Stator, welche den Durchflusswiderstand weiter erhöhen könnten, entfallen. Eine weitere Ausführungsform sieht vor, dass der Rotormagnet innen bereichsweise hohl ist, zum Aufstecken auf eine gemeinsame, mit einem Medienförderrad oder mit einer Medienförderschnecke verbundenen Welle. Auf diese Weise kann eine noch bessere Integration der Rotorwelle bzw. Antriebsachse mit dem Rotormagneten und sogar einem medienfördernden Teil (Medienförderrad oder Medienförderschnecke) erfolgen. Bei der Integration des Rotormagneten in die Rotorwelle bzw. das Medienförderrad/Medienförderschnecke, ist es vorteilhaft, dass die an den Rotormagneten angrenzenden Bauteile aus einem magnetisch nicht oder sehr schlecht leitfähigen Material sind, vorzugsweise aus verstärktem oder unverstärktem Kunststoff.

Eine weitere vorteilhafte Weiterbildung sieht vor, dass die Lagerung der Rotorwelle ungeschmiert ist oder durch das zu fördernde Medium selbst geschmiert wird (dies ist beispielsweise bei hydrodynamischen Lagern vorteilhaft). Insgesamt kommen für die Förderung mit dem erfindungsgemäßen Elektromotor praktisch beliebige Medien in Betracht, nämlich sämtliche Gase (insbesondere Luft) sowie flüssige Medien (insbesondere wässrige Medien).

Ein besonderer Vorteil des erfindungsgemäßen Medienspaltmotors liegt darin, dass das axiale Zentrum des Stators und das axiale Zentrum des Rotors in axialer Richtung verschoben sein können und zwar um ein Zehntel bis ein Fünftel der größten axialen Ausdehnung des Rotormagneten. Der erfindungsgemäße Elektromotor ist insbesondere geeignet zur Verwendung in einem elektrisch unterstützten Turbolader mit frei auskragendem Elektromotor, zum Transport von explosiven Gasen, Stäuben, Dämpfen, verklebenden Stoffen, Pasten, Flüssigkeiten wie Wasser oder Öl; verderblichen Gütern, wie Lebensmittel; in Lüftungseinrichtungen, in Pumpen, insbesondere Pumpen für aggressive Medien, wie zum Beispiel Salzwasser, chemische Lösungen (insbesondere im dentalchirurgischen Bereich); in desinfizierbaren bzw. sterilisierbaren Pumpen, Spaltrohrpumpen (Medientransport in axialer Richtung), Dosierpumpen, Mikropumpen, Einwegpumpen, mehrstufigen Pumpsystemen; zur Verwendung in Turbinen, Generatoren, Förderschnecken für zum Beispiel körnige Medien, Flüssigkeiten oder Pasten; in Gas-, Wasser- und Dampfturbinen; in Vorrichtungen zur Medienflussmessung über eine Generatorspannung.

Weitere vorteilhafte Weiterbildungen werden in den übrigen abhängigen Ansprüchen angegeben.

Die Erfindung wird nun anhand mehrerer Figuren erläutert. Es zeigen
- Figuren 1a bis 1d:: Ansichten eines Turboladers, bei dem der erfindungsgemäße Elektromotor Anwendung findet,
- Figuren 2a und 2b:: Querschnittsansichten eines erfindungsgemäßen Elektromotors,
- Figuren 3 bis 6:: Ansichten bzw. Schnitte weiterer Anwendungsbeispiele für den erfindungsgemäßen Elektromotor.

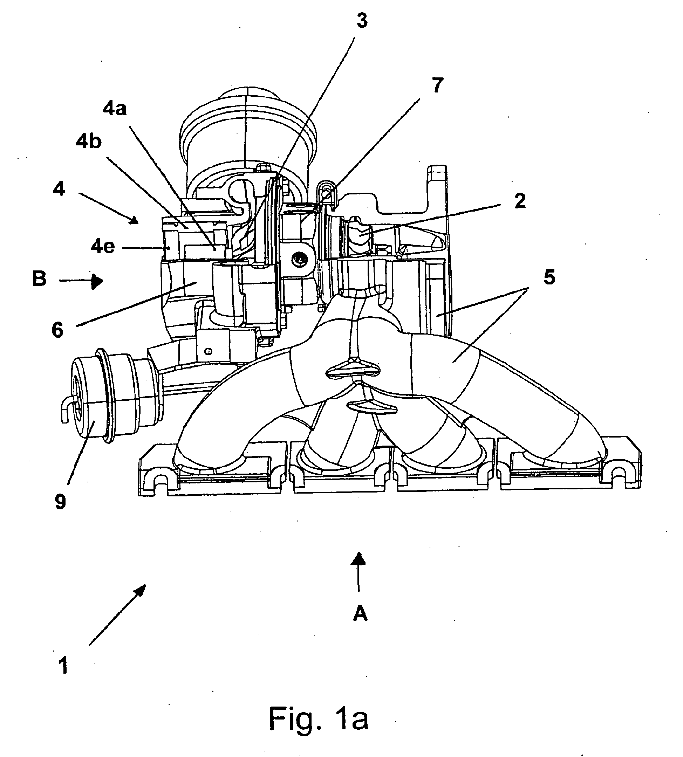

Im Folgenden soll ein Anwendungsbeispiel der Erfindung zunächst anhand der Fign. 1a bis 1d gezeigt werden.

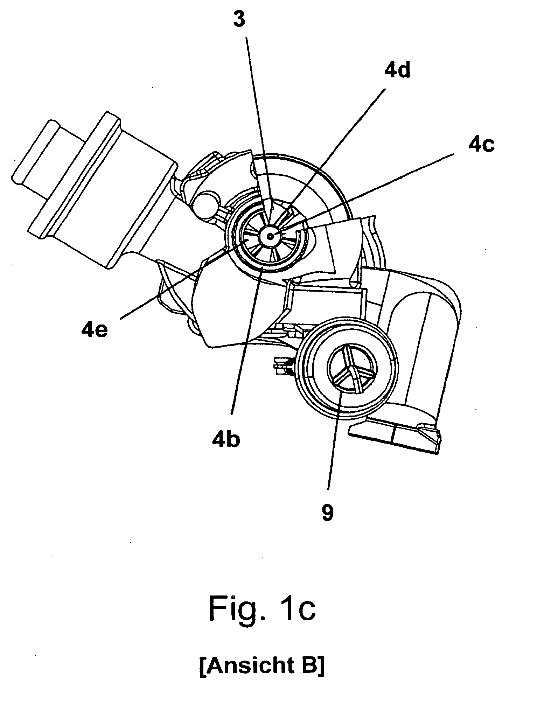

Fign. 1a bis 1d zeigen einen Turbolader 1, der mit einem Turbinengehäuse 5 an einen Verbrennungskraftmotor ankoppelbar ist. Durch den in Fig. 1a gezeigten Abgasfächer wird nach der Verbrennung das Abgas gesammelt und zum Antrieb eines Turbinenrades 2 genutzt. Das Turbinenrad 2 ist vom Turbinengehäuse 5 umgeben und ist im Wesentlichen einem herkömmlichen mechanischen Turbolader entnommen. An das Turbinengehäuse 5 schließt sich ein Lagergehäuse 7 und sodann ein Verdichtergehäuse 6 an. In diesem Verdichtergehäuse 6 ist ein Verdichterrad angebracht, das durch eine Medien-Durchlassöffnung (4e) in Form einer Einlassöffnung zugeführte Luft (diese Einlassluftöffnung ist insbesondere in Fig. 1c gut zu sehen) mittels eines Verdichterrades 3 verdichtet und auf hier nicht dargstellte Weise zu dem Brennraum des Verbrennungskraftmotors führt. Das Verdichterrad 3 zeigt in Fig. 1a linksseitig einen Fortsatz, an dem ein Rotor 4a eines Elektromotors gegeben ist. Der Rotor 4a ist zentral in der Einlassluftöffnung 4e angebracht.

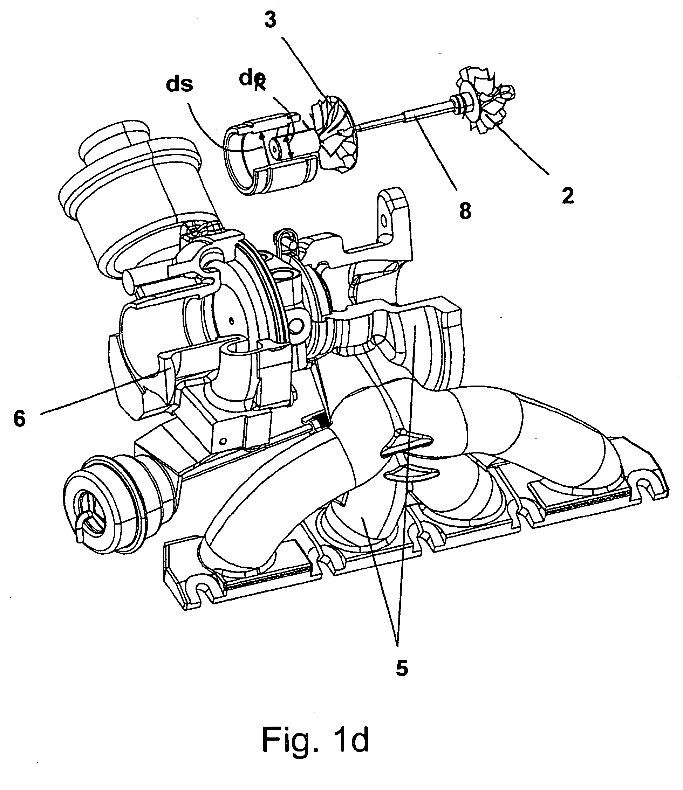

Um den Rotor 4a herum ist ein Stator 4b vorgesehen, der im Wesentlichen eine hohlzylindrische Form aufweist und als Teil der Innenwand des Verdichtergehäuses im Bereich der Einlassluftöffnung dargestellt ist. Vorliegend ist der Stator 4b sogar als Einsatz in eine entsprechende Öffnung vorgesehen, so dass dieser sehr leicht montierbar ist. Vorliegend ist in Fig. 1a also der Rotorspalt zwischen Rotor 4a und Stator 4b die Einlassluftöffnung 4e für das Verdichterrad. Hierbei ist auch gemäß Fig. 1a die Einlassluftöffnung 4e frei von Streben zwischen Rotor und Stator. Der kleinste Innendurchmesser des Stators (siehe "dₛ" in Fig. 1d) ist 1,5-mal größer als der größte Außendurchmesser d_{R} des Rotors.

Der Rotor 4a des Elektromotors 4 weist einen Rotormagneten 4c auf, der von einer Armierung umgeben ist (siehe z.B. Fig. 1d). Hierbei ist die Armierung im Wesentlichen "becherförmig" ausgeführt, wobei der Boden des Bechers zum Verdichterrad hin fast vollständig geschlossen ist (abgesehen von einer zentrischen Montagebohrung).

Das Verdichterrad kann (muss aber nicht) aus einem nichtmetallischen Material sein, hier bei einer Ausführung beispielsweise aus einem unverstärkten Kunststoff ist die Beeinflussung des elektromagnetischen Feldes des Elektromotors minimiert. Der Rotormagnet 4c wiederum ist bereichsweise hohl zum Aufstecken auf eine gemeinsame Welle mit dem Verdichterrad. Hier ist in Fig. 1d eine Bohrung 4c des Rotormagneten entsprechend zu sehen. Außerdem ist zu sehen, dass in der Abfolge Rotor (bestehend aus Rotormagnet 4c und Armierung 4d), Verdichterrad 3, Welle 8, Turbinenrad 2 eine Abfolge von Elementen gezeigt ist, die eine thermische Belastung des Elektromotors minimieren. Die Welle 8 ist hierbei in der vorliegenden Ausführungsform so ausgeführt, dass Turbinenrad 2, Verdichterrad 3 sowie Rotor 4a fest (drehfest) miteinander verbunden sind, also durch keine Drehkupplung bzw. Freilauf trennbar sind.

Allerdings ist es prinzipiell möglich, eine solche Kupplung im Rahmen der vorliegenden Erfindung vorzusehen, falls beispielsweise die Drehzahl des Turbinenrades 2 sehr hoch ist, hierdurch würde allerdings der konstruktive Aufwand auch wiederum erhöht.

Die Sollspannung des Elektromotors 4 in Fig. 1a beträgt vorliegend 12 V, es sind allerdings auch andere Spannungen (beispielsweise 48 V für Hybridfahrzeuge) möglich.

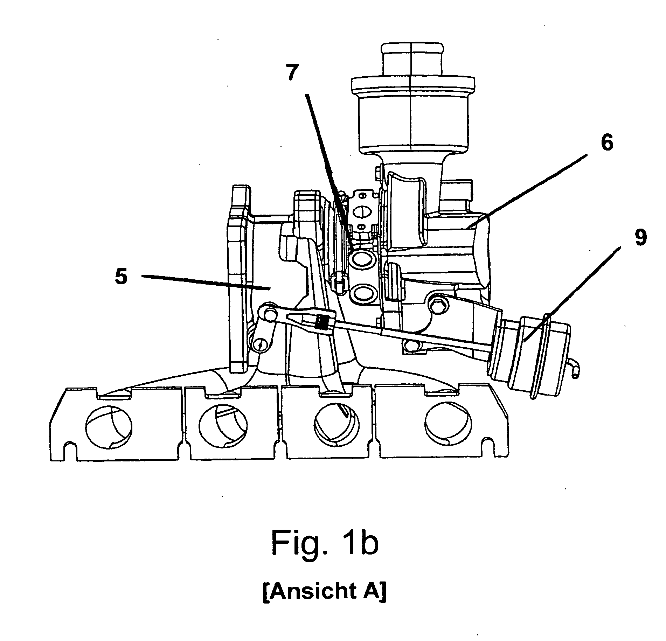

Der Elektromotor ist sowohl im Motorbetrieb (zur Beschleunigung und Vermeidung eines "Turbolochs" als auch im Generatorbetrieb (zur Rückgewinnung von Energie) betreibbar. Erreicht der Ladedruck (im Turbinengehäuse) einen bestimmten Sollwert, wird unter Verwendung eines rückspeisefähigen Umrichters zusätzliche elektrische Energie erzeugt. Idealerweise kann durch dieser energetische Umwandlung der Bremsenergie im Generatorbetrieb auf ein Wastegate/Druckdose zum Abblasen eines überschüssigen Abgasdrucks wie sie in Fig.1b Ziffer 9 dargestellt ist, verzichtet werden.

Der erfindungsgemäße Turbolader findet Anwendung in einem erfindungsgemäßen Antriebssystem für Kraftfahrzeuge, das einen mit dem Turbolader verbundenen Verbrennungskraftmotor sowie einen Speicher für elektrische Energie enthält. Der Elektromotor des Turboladers 1 ist hierbei mit dem Speicher für elektrische Energie verbunden zur Entnahme elektrischer Energie in einem Motorbetrieb des Turboladers 1 und zur Einspeisung elektrischer Energie in einen Generatorbetrieb des Turboladers. In einer besonders bevorzugten Ausführungsform ist der Elektromotor des Turboladers mit einem elektrischen Speicher verbunden, wobei dieser elektrische Speicher zusätzlich mit einem elektromotorischen Antrieb eines Kraftfahrzeugs verbindbar ist. Dies kann ein "Nabenmotor" eines Kraftfahrzeugs sein oder ein anderer Elektromotor, der im Antriebsstrang eines Kraftfahrzeugs (beispielsweise im Bereich des Getriebes) vorgesehen ist.

Dieser Anschluss des elektrischen Turboladers an ein "Hybrid"-Fahrzeug ist besonders energieeffizient.

Zur effizienten Steuerung des Antriebssystems bzw. des Turboladers ist eine Steuerelektronik zur Ermittlung der Drehzahl von Turbinenrad 2 oder Verdichterrad 3, Ist-Werten von turbinengehäuseseitigen und verdichtergehäuseseitigen Druckverhältnissen sowie weiteren für den Verbrennungskraftmotor drehmomentrelevanten Werten vorgesehen.

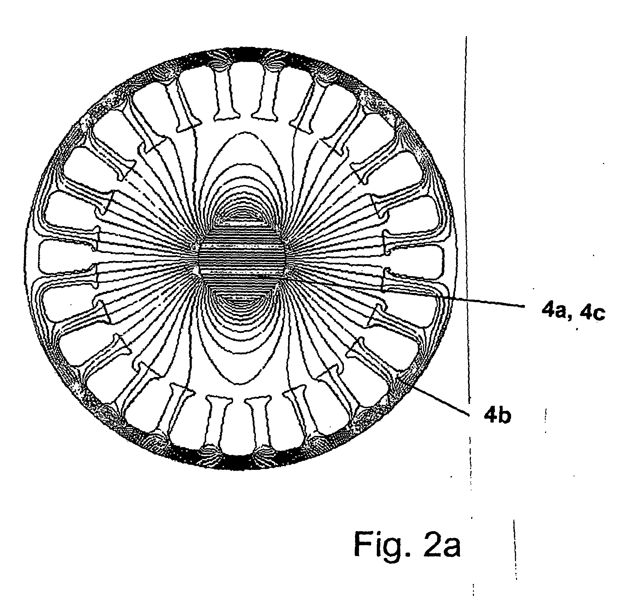

Figur 2a zeigt eine Feldliniendarstellung des magnetischen Flusses zwischen Rotor 4a und Stator 4b.

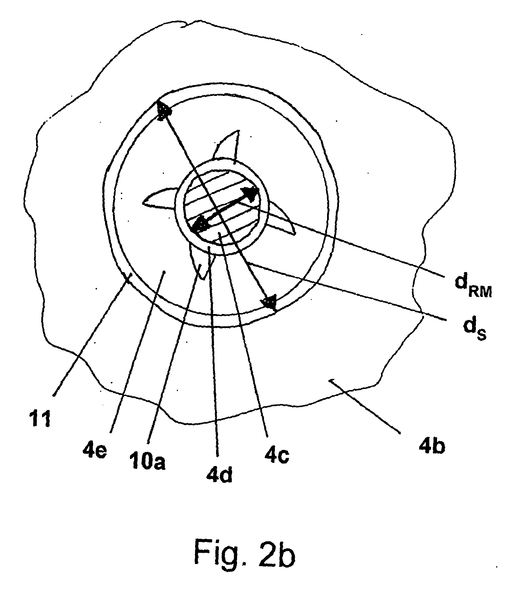

Figur 2b zeigt nochmals die geometrischen Verhältnisse des erfindungsgemäßen Elektromotors. Zu sehen ist hier ein vollzylindrischer Rotormagnet, der einen größten Außendurchmesser d_{RM} aufweist. Um diesen Rotormagneten 4c herum ist eine Armierung 4d angebracht. Auf dieser Armierung wiederum ist ein Medienförderrad 10a angebracht. Um das Medienförderrad 10a herum ist eine Mediendurchlassöffnung 4e gegeben, diese wird radial nach außen von einer Abschirmung 11 umgeben. Um die Abschirmung 11 herum, ist dann der eigentliche Stator 4b gegeben, dessen Außendurchmesser mit d_{S} angegeben wird.

Bei dem beispielhaften Elektromotor beträgt die Remanenz 1,28 Tesla, die Energiedichte 315 kJ/m³, der Rotormagnet besteht aus NdFeB.

Gezeigt ist also hier ein Elektromotor 4 zur Förderung von Medien, wobei dieser einen Stator 4b, einen Rotor 4a mit einem Rotormagneten 4c sowie zwischen Stator und Rotor eine Medien-Durchlassöffnung 4e aufweist. Der kleinste Innendurchmesser dₛ des Stators beträgt hierbei 1,5- bis 8-mal, vorzugsweise 2- bis 4-mal, soviel wie der größte Außendurchmesser des Rotormagneten selbst (d_{RM}), im vorliegenden Falle beträgt dₛ = 2 x d_{RM}.

Der Rotormagnet ist vorzugsweise zum Schutz vor Medien bzw. Beschädigungen mit einer Armierung umgeben. Diese kann becherförmig ausgeführt sein. Der Stator ist vorzugsweise als Einsatz in eine korrespondierende Öffnung eines umgebenden Gehäuses ausgeführt. Nach Innen hin, das heißt zur Mediendurchlassöffnung hin, ist vorzugsweise eine Abschirmung 11 vorgesehen, die den Stator vor Korrosion schützt und die Flusseigenschaften verbessert.

Diese ist vorzugsweise in Form eines Rohres vorgesehen, wobei das Rohr aus einem elektrisch und magnetisch nicht bzw. schlecht leitendem Kunststoff, z.B. Glasfaser, alternatniv z.B. aus Glas oder Gummi, ist. Besonders vorzugsweise weist der Rotor eine Rotorwelle auf, wobei diese Rotorwelle einfach oder mehrfach über ihre Länge gelagert ist. Die Rotorwelle ist hierbei besonders vorzugsweise einseitig gelagert und auf diese Weise "auskragend".

Hierdurch wird der Strömungswiderstand durch den Rotor weiter vermindert. Der Rotormagnet ist vorzugsweise auf eine gemeinsame Welle mit einem Medienförderrad oder einer Medienförderschnecke aufgesteckt bzw. innen integriert und somit gleich zentriert. Um den Rotormagneten herum können dann wiederum ein Medienförderrad bzw. eine Medienförderschnecke angebracht werden, (diese haben Ausnehmungen für die Aufnahme des Rotormagneten), so dass eine größtmögliche Integration der Bauteile möglich wird.

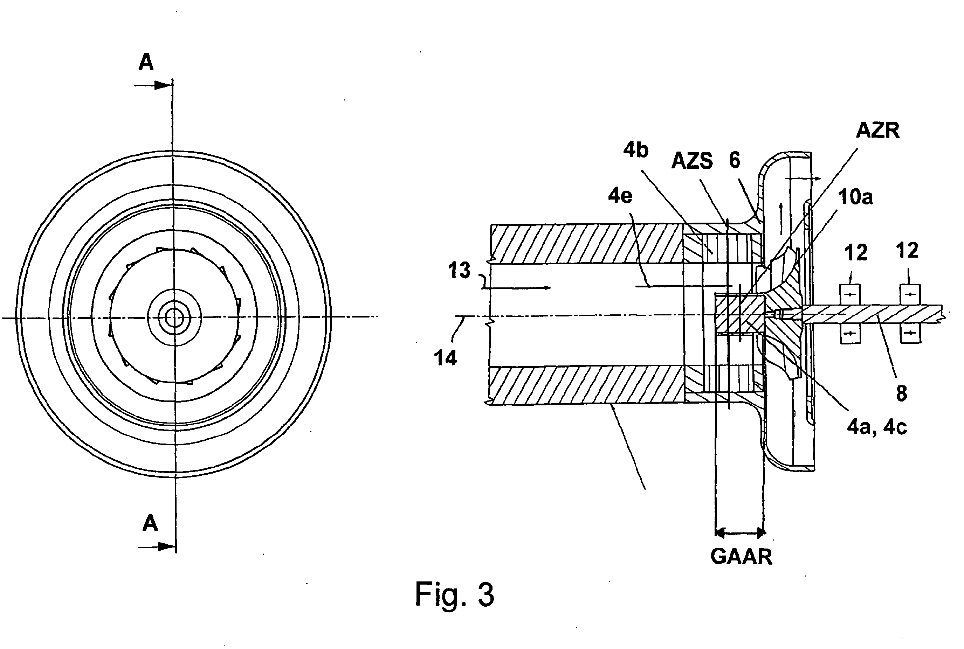

Figur 3 zeigt eine Anwendung eines Elektromotors, der ein Medienförderrad 10a aus einem Kunststoffmaterial aufweist. Auf der Stirnseite dieses Medienförderrades 10a ist ein Rotormagnet 4c angebracht. Lagerstellen 12 lagern eine Rotorwelle 8, die in dem Medienförderrad 10a eingeschraubt ist. Ein Stator 4b ist in einer Innenwand eines Gehäuses 6 untergebracht. Der Strom eines Mediums 13 wird links eingeleitet und durch das Medienförderrad 10a nach rechts hin befördert. Vorteilhaft ist im vorliegenden Fall wiederum eine große Spaltbreite, nicht nur radial um die Achse 14, sondern auch axial in Richtung der Achse 14. Dies kommt auch dadurch, dass das axiale Zentrum des Stators AZS und das axiale Zentrum des Rotors AZR in axialer Richtung verschoben sind, und zwar um ein Zehntel bis ein Fünftel der größten axialen Ausdehnung GAAR des Rotormagneten.

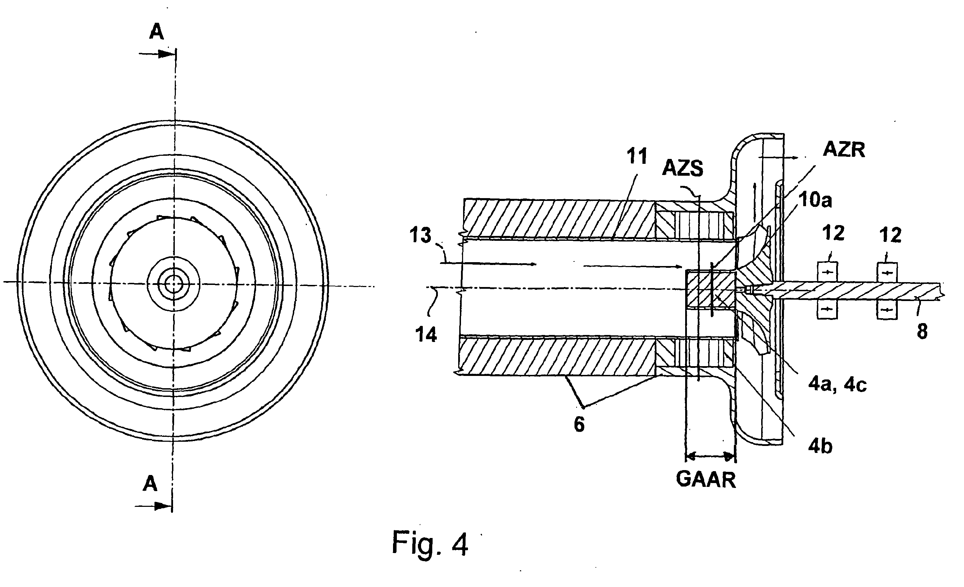

Figur 4 zeigt eine der Figur 3 im Wesentlichen entsprechende Darstellung, wobei hier zusätzlich eine Abschirmung 11 vorgesehen ist, welche den Stator 4b gegen das Medium 13 schützt.

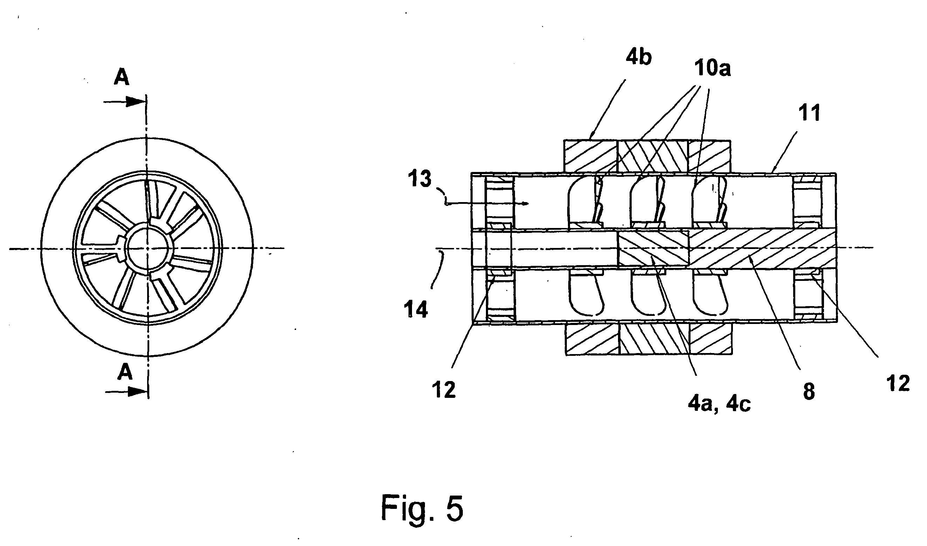

Figur 5 zeigt eine weitere Ausführungsform einer erfindungsgemäßen Pumpe bzw. eines erfindungsgemäßen Durchflussmessers, bei dem drei Flügelräder 10a auf einer Rotorwelle 8 gelagert sind. Hierbei sind die Lager 12 links sowie rechtsseitig der drei Medienförderräder 10a angebracht. Der Stator 4b ist in axialer Richtung bezüglich der Achse 14 zentriert um den Rotormagneten 4c angebracht. Die Medienförderräder weisen einen inneren Hohlraum auf, der die Rotorwelle 8 bzw. den darin befindlichen Rotormagneten 4c aufnimmt. Auf diese Weise ist eine besonders einfache und sicher gelagerte Vorrichtung geben, durch entsprechende Stege wird einerseits der Halt der Rotorwelle 8 gewährleistet, außerdem wird durch die relativ geringen Stegquerschnitte ein ausreichender Durchfluss von Medien 13 erreicht.

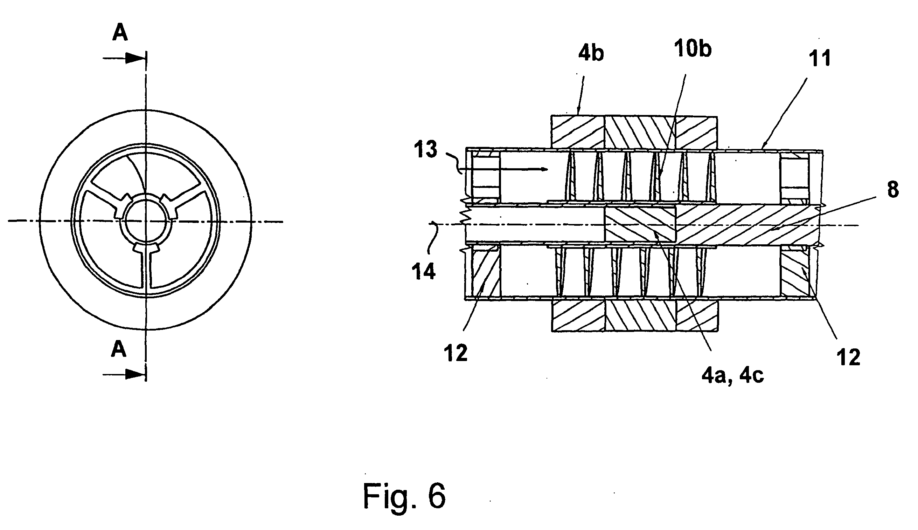

Figur 6 zeigt ein Ausführungsbeispiel, das Figur 5 recht ähnlich ist. Allerdings wird hier statt der drei einzelnen Förderrräder 10a eine Medienförderschnecke 10b vorgesehen, die besonders gut zu der Abschirmung 11 hin Medien abdichtet.

## Patentansprüche

1. Elektromotor (4) zur Förderung von Medien, wobei dieser einen Stator (4b), einen Rotor (4a) mit einem Rotormagneten (4c) sowie zwischen Stator und Rotor eine Medien-Durchlassöffnung aufweist (4e),
**dadurch gekennzeichnet, dass** der kleinste Innendurchmesser (dₛ) des Stators 1,5- bis 8-mal so groß ist wie der größte Außendurchmesser (d_{RM}) des Rotormagneten.

2. Elektromotor nach Anspruch 1, **dadurch gekennzeichnet, dass** dies ein Permanentmagnetsynchronmotor ist.

3. Elektromotor nach einem der vorhergehenden Ansprüche, **dadurch gekennzeichnet, dass** der Rotormagnet (4c) eine Remanenz > 0,8 Tesla und/oder eine hohe Energiedichte > 100kJ/m³ aufweist.

4. Elektromotor nach einem der vorhergehenden Ansprüche, **dadurch gekennzeichnet, dass** der Rotormagnet aus Seltene-Erde-Materialien besteht, insbesondere aus NdFeB oder SmCo.

5. Elektromotor nach einem der vorhergehenden Ansprüche, **dadurch gekennzeichnet, dass** der Rotormagnet (4c) von einer Armierung (4d) umgeben ist.

6. Elektromotor nach Anspruch 5, **dadurch gekennzeichnet, dass** die Armierung (4d) des Rotormagneten zylinderförmig ausgeführt ist.

7. Elektromotor nach einem der vorhergehenden Ansprüche, **dadurch gekennzeichnet, dass** der Stator (4b) als Teil einer Innenwand eines umgebenden Gehäuses (6) ausgeführt ist.

8. Elektromotor nach einem der vorhergehenden Ansprüche, **dadurch gekennzeichnet, dass** der Stator (4b) als Einsatz in eine korrespondierende Öffnung eines umgebenden Gehäuses (6) einsetzbar ist.

9. Elektromotor nach einem der vorhergehenden Ansprüche, **dadurch gekennzeichnet, dass** die Medien-Durchlassöffnung (4e) frei von Streben zwischen Rotor und Stator ist.

10. Elektromotor nach einem der vorhergehenden Ansprüche, **dadurch gekennzeichnet, dass** der Stator (4b) im Wesentlichen eine hohlzylindrische Form aufweist.

11. Elektromotor nach einem der vorhergehenden Ansprüche, **dadurch gekennzeichnet, dass** der Rotormagnet (4c) zur Integration in eine Welle vorbereitet ist zur Integration auf eine gemeinsame Welle (8) mit einem Medienförderrad oder einer Medienförderschnecke.

12. Elektromotor nach einem der vorhergehenden Ansprüche, **dadurch gekennzeichnet, dass** der Rotormagnet (4c) partiell oder auch komplett in ein Medienförderrad (10a) oder eine Medienförderschnecke (10b) integriert ist.

13. Elektromotor nach einem der vorhergehenden Ansprüche, **dadurch gekennzeichnet, dass** das Medienförderrad (10a) oder die Medienförderschnecke (10b) aus einem magnetisch nicht oder schlecht leitfähigen Material sind, vorzugsweise aus einem verstärkten oder unverstärkten Kunststoff.

14. Elektromotor nach einem der vorhergehenden Ansprüche, **dadurch gekennzeichnet, dass** der Stator (4b) zum Inneren hin mit einer Abschirmung (11) versehen ist.

15. Elektromotor nach Anspruch 14, **dadurch gekennzeichnet, dass** die Abschirmung (11) die Form eines Rohres oder eines Schlauches aufweist.

16. Elektromotor nach einem der Ansprüche 14 oder 15, **dadurch gekennzeichnet, dass** die Abschirmung (11) aus elektrisch und magnetisch nicht leitendem Material ist.

17. Elektromotor nach einem der vorhergehenden Ansprüche, **dadurch gekennzeichnet, dass** der Rotor (4a) eine Rotorwelle aufweist, wobei diese Rotorwelle einfach oder mehrfach über ihre Länge gelagert ist.

18. Elektromotor nach Anspruch 17, dass die Rotorwelle (8) im Wesentlichen einseitig gelagert ist und auf der anderen Seite im Wesentlichen frei auskragt.

19. Elektromotor nach einem der Ansprüche 17 oder 18m, **dadurch gekennzeichnet, dass** der Rotor (4a) und/oder der Rotormagnet (4c) in eine von dem Elektromotor anzutreibende Achse integriert sind.

20. Elektromotor nach einem der Ansprüche 17 bis 19, **dadurch gekennzeichnet, dass** die Lagerung der Rotorwelle (8) ungeschmiert ist oder fördermediengeschmiert ist.

21. Elektromotor nach einem der vorhergehenden Ansprüche, **dadurch gekennzeichnet, dass** das axiale Zentrum des Stators (AZS) und das axiale Zentrum des Rotors (AZR) in axialer Richtung verschoben sein können, und zwar um ein Zehntel bis ein Fünftel der größten axialen Ausdehnung (GAAR) des Rotormagneten.

22. Elektromotor nach einem der vorhergehenden Patentansprüche zur Verwendung in einem elektrisch unterstützten Turbolader mit frei auskragendem Elektrorotor, zum Transport von explosiven Gasen, Stäuben, Dämpfen, verklebenden Stoffen, Pasten, Flüssigkeiten wie Wasser oder Öl; verderblichen Gütern, wie Lebensmittel; in Lüftungseinrichtungen, in Pumpen, insbesondere Pumpen für aggressive Medien, wie zum Beispiel Salzwasser, chemische Lösungen (insbesondere im dentalchirurgischen Bereich); in desinfizierbaren bzw. sterilisierbaren Pumpen, Spaltrohrpumpen (Medientransport in axialer Richtung), Dosierpumpen, Mikropumpen, Einwegpumpen, mehrstufigen Pumpsystemen; zur Verwendung in Turbinen, Generatoren, Förderschnecken für zum Beispiel körnige Medien, Flüssigkeiten oder Pasten; in Gas-, Wasser- und Dampfturbinen; in Vorrichtungen zur Medienflussmessung über eine Generatorspannung.

## Claims

1. Electric motor (4) for conveying media, comprising a stator (4b), a rotor (4a) with a rotor magnet (4c), and a media passage opening (4e) between the stator and the rotor,
**characterised in that** the smallest inner diameter (dₛ) of the stator is 1.5- to 8-times as large as the largest outer diameter (d_{RM}) of the rotor magnet.

2. Electric motor according to Claim 1, **characterised in that** the motor is a permanent magnet synchronous motor.

3. Electric motor according to one of the preceding claims, **characterised in that** the rotor magnet (4c) has a remanence > 0.8 Teslas and/or a high energy density > 100 kJ/m³_{.}

4. Electric motor according to one of the preceding claims, **characterised in that** the rotor magnet consists of rare-earth materials, in particular of NdFeB or SmCo.

5. Electric motor according to one of the preceding claims, **characterised in that** the rotor magnet (4c) is surrounded by a sheathing (4d).

6. Electric motor according to Claim 5, **characterised in that** the sheathing (4d) of the rotor magnet is of cylinder-shaped design.

7. Electric motor according to one of the preceding claims, **characterised in that** the stator (4b) is designed as part of an inner wall of a surrounding housing (6).

8. Electric motor according to one of the preceding claims, **characterised in that** the stator (4b) is insertable, as an insert, into a corresponding opening of a surrounding housing (6).

9. Electric motor according to one of the preceding claims, **characterised in that** the media passage opening (4e) is free of struts between the rotor and the stator.

10. Electric motor according to one of the preceding claims, **characterised in that** the stator (4b) has a substantially hollow-cylindrical shape.

11. Electric motor according to one of the preceding claims, **characterised in that** the rotor magnet (4c) is prepared for integration into a shaft, for integration onto a common shaft (8) with a media impeller or a media conveyor worm.

12. Electric motor according to one of the preceding claims, **characterised in that** the rotor magnet (4c) is partially or else completely integrated into a media impeller (10a) or a media conveyor worm (10b).

13. Electric motor according to one of the preceding claims, **characterised in that** the media impeller (10a) or the media conveyor worm (10b) is composed of a material which is magnetically non-conductive or poorly conductive, preferably of a reinforced or non-reinforced plastic.

14. Electric motor according to one of the preceding claims, **characterised in that** the stator (4b) is provided with a shielding (11) towards the inside.

15. Electric motor according to Claim 14, **characterised in that** the shielding (11) has the form of a tube or a flexible tubing.

16. Electric motor according to one of Claim 14 or 15, **characterised in that** the shielding (11) is composed of electrically and magnetically non-conductive material.

17. Electric motor according to one of the preceding claims, **characterised in that** the rotor (4a) comprises a rotor shaft, this rotor shaft being mounted in a single or multiple manner over its length.

18. Electric motor according to Claim 17, **characterised in that** the rotor shaft (8) is substantially mounted on one side and substantially freely projects on the other side.

19. Electric motor according to one of Claim 17 or 18, **characterised in that** the rotor (4a) and/or the rotor magnet (4c) are integrated into a shaft to be driven by the electric motor.

20. Electric motor according to one of Claims 17 to 19, **characterised in that** the rotor shaft (8) is mounted in a non-lubricated manner or a manner lubricated by conveying media.

21. Electric motor according to one of the preceding claims, **characterised in that** the axial centre of the stator (AZS) and the axial centre of the rotor (AZR) can be displaced in an axial direction by one tenth up to one fifth of the largest axial extension (GAAR) of the rotor magnet.

22. Electric motor according to one of the preceding claims for use in an electrically aided turbocharger with a freely projecting electric rotor, for the transport of explosive gases, dusts, vapours, sticking substances, pastes, liquids such as water or oil; perishable goods, such as foodstuffs; in ventilation devices, in pumps, in particular pumps for aggressive media, such as for example salt water, chemical solutions (in particular in the dentil-surgical field); in disinfectable or sterilisable pumps, canned motor pumps (media transport in an axial direction), metering pumps, micro-pumps, disposable pumps, multi-stage pump systems; for use in turbines, generators, conveyor worms for example for granular media, liquids or pastes; in gas, water and steam turbines; in devices for measuring the media flow via a generator voltage.

## Revendications

1. Moteur électrique (4) pour transporter des milieux, dans lequel celui-ci présente un stator (4b), un rotor (4a) avec un aimant de rotor (4c), ainsi qu'entre le stator et le rotor, une ouverture de passage de milieux (4e),
**caractérisé en ce que**
le plus petit diamètre interne (d_{S}) du stator est 1,5 à 8 fois supérieur au plus grand diamètre externe (d_{AR}) de l'aimant du rotor.

2. Moteur électrique selon la revendication 1, **caractérisé en ce que** celui-ci est un moteur synchrone à aimant permanent.

3. Moteur électrique selon l'une quelconque des revendications précédentes, **caractérisé en ce que** l'aimant de rotor (4c) présente une rémanence > 0,8 tesla et/ou une densité d'énergie élevée > 100 kJ/m³.

4. Moteur électrique selon l'une quelconque des revendications précédentes, **caractérisé en ce que** l'aimant du rotor est constitué de matériaux de terres rares, en particulier de NdFeB ou de SmCo.

5. Moteur électrique selon l'une quelconque des revendications précédentes, **caractérisé en ce que** l'aimant de rotor (4c) est entouré par une armature (4d).

6. Moteur électrique selon la revendication 5, **caractérisé en ce que** l'armature (4d) de l'aimant de rotor se présente sous une forme cylindrique.

7. Moteur électrique selon l'une quelconque des revendications précédentes, **caractérisé en ce que** le stator (4b) se présente comme une partie d'une paroi interne d'un boîtier enveloppant (6).

8. Moteur électrique selon l'une quelconque des revendications précédentes, **caractérisé en ce que** le stator (4b) peut être inséré sous la forme d'un élément rapporté dans une ouverture correspondante d'un boîtier enveloppant (6).

9. Moteur électrique selon l'une quelconque des revendications précédentes, **caractérisé en ce que** l'ouverture de passage de milieux (4e) est exempte d'étais entre le rotor et le stator.

10. Moteur électrique selon l'une quelconque des revendications précédentes, **caractérisé en ce que** le stator (4b) présente une forme creuse sensiblement cylindrique.

11. Moteur électrique selon l'une quelconque des revendications précédentes, **caractérisé en ce que** l'aimant de rotor (4c) destiné à l'intégration à un arbre est préparé pour l'intégration à un arbre commun (8) avec une roue de transport de milieux ou une vis sans fin de transport de milieux.

12. Moteur électrique selon l'une quelconque des revendications précédentes, **caractérisé en ce que** l'aimant de rotor (4c) est intégré partiellement ou complètement à une roue de transport de milieux (10a) ou à une vis sans fin de transport de milieux (10b).

13. Moteur électrique selon l'une quelconque des revendications précédentes, **caractérisé en ce que** la roue de transport de milieux (10a) ou la vis sans fin de transport de milieux (10b) est formée d'un matériau magnétiquement non conducteur ou difficilement conducteur, de préférence un matériau synthétique renforcé ou non renforcé.

14. Moteur électrique selon l'une quelconque des revendications précédentes, **caractérisé en ce que** le stator (4b) est doté à l'intérieur d'un écran (11).

15. Moteur électrique selon la revendication 14, **caractérisé en ce que** l'écran (11) présente la forme d'un tube ou d'un tuyau.

16. Moteur électrique selon l'une quelconque des revendications 14 ou 15, **caractérisé en ce que** l'écran (11) est formé d'un matériau électriquement et magnétiquement non conducteur.

17. Moteur électrique selon l'une quelconque des revendications précédentes, **caractérisé en ce que** le rotor (4a) présente un arbre de rotor, dans lequel cet arbre de rotor est à palier unique ou à paliers multiples sur toute sa longueur.

18. Moteur électrique selon la revendication 17, **caractérisé en ce que** l'arbre de rotor (8) est sensiblement monté d'un côté et fait saillie sensiblement librement sur l'autre côté.

19. Moteur électrique selon l'une quelconque des revendications 17 ou 18, **caractérisé en ce que** le rotor (4a) et/ou l'aimant de rotor (4c) sont intégrés à un axe à entraîner par le moteur électrique.

20. Moteur électrique selon l'une quelconque des revendications 17 à 19, **caractérisé en ce que** le coussinet de l'arbre de rotor (8) est non graissé ou graissé par un milieu de transport.

21. Moteur électrique selon l'une quelconque des revendications précédentes, **caractérisé en ce que** le centre axial du stator (CAS) et le centre axial du rotor (CAR) peuvent être déplacés dans la direction axiale et ce, d'un dixième à un cinquième de l'extension axiale la plus grande (EAGR) de l'aimant du rotor.

22. Moteur électrique selon l'une quelconque des revendications précédentes pour l'utilisation dans un turbocompresseur assisté électriquement avec un rotor électrique faisant saillie librement, pour le transport de gaz explosifs, de poussières, de vapeurs, de substances collantes, de pâtes, de liquides comme l'eau ou l'huile ; de produits périssables comme des aliments ; dans des dispositifs de ventilation, dans des pompes, en particulier des pompes pour milieux agressifs, tels que l'eau salée, des solutions chimiques (en particulier dans le domaine de la chirurgie dentaire) ; dans des pompes pouvant être désinfectées ou stérilisées, des pompes à gaine (transport de milieux dans la direction axiale), des pompes de dosage, des micropompes, des pompes unidirectionnelles, des systèmes de pompes à plusieurs étages ; pour l'utilisation dans des turbines, des générateurs, des vis sans fin de transport, par exemple, pour des milieux granulaires, des liquides ou des pâtes ; dans des turbines à gaz, à eau et à vapeur ; dans des dispositifs de mesure de flux de milieux via une tension de générateur.
